# EUROPÄISCHE PATENTANMELDUNG

(11) **EP 3 096 127 A1**
(43) Veröffentlichungstag der Anmeldung: **23.11.2016**
(21) Anmeldenummer: 15167935.4
(22) Anmeldetag: 18.05.2015
(51) Int. Cl.: G01N 17/00, G01N 3/56

(54) **VERFAHREN ZUR ÜBERPRÜFUNG EINER HALTBARKEIT EINER MARKIERUNG**

(71) Anmelder: Berndorf Metall- und Bäderbau GmbH, 2560 Berndorf (AT)
(72) Erfinder: LÖCKER, Christine, 2514 Möllersdorf (AT); STRANZ, Nina, 2551 Enzesfeld (AT)
(74) Vertreter: Burger, Hannes

(57) **Zusammenfassung**

Die Erfindung betrifft ein Verfahren zum Überprüfen einer Haftung einer Markierung auf Oberfläche eines in einem Betrieb mit einer Flüssigkeit befüllten Beckens, wie Schwimmbecken, Erlebnisbecken, Mehrzweckbecken, Kinderplanschbecken, Warmsprudelbecken, Tauchbecken, Saunabecken, Kneippbecken, Therapiebecken, usw. , wobei in einem Schritt i) eine der Markierung hinsichtlich Dicke und Zusammensetzung entsprechende Schicht (1) auf ein als Substrat (2) dienendes Probenstück, welches aus einem gleichen Material besteht wie die der Nässe ausgesetzte Oberfläche des Beckens, aufgetragen wird, wobei in einem Schritt ii) ein Querschnitt durch die Schicht (1) und das Substrat (2) angefertigt wird, und in einem Schritt iii) eine Dicke der Schicht (1) und eine Größe von in der Schicht (1) enthaltenen Partikeln (3) ermittelt wird, wobei überprüft wird, ob Paitikel (3) mit einem maximalen Querschnittsdurchmesser von mehr als 30% der Dicke der Schicht (1) vorhanden sind, wobei weiters überprüft wird, ob kein Spalt zwischen der Schicht (1) und dem Substrat (2) vorhanden ist und ob kein Lunker in der Schicht (1) enthalten ist.

## Beschreibung

Die Erfindung betrifft ein Verfahren zum Überprüfen einer Güte und Haftung einer Markierung auf einer Oberfläche eines in einem Betrieb mit einer Flüssigkeit befüllten Beckens, wie Schwimmbecken, Erlebnisbecken, Mehrzweckbecken, Kinderplanschbecken, Warmsprudelbecken, Tauchbecken, Saunabecken, Kneippbecken, Therapiebecken, usw.
Bei Markierungen, wie sie in Becken der oben genannten Art Verwendung finden, beispielsweise zur Markierung von Schwimmbahnen im Bodenbereich oder von Stufen in einem Ein/Ausstiegsbereich oder anderen Mustern wie z.B. Logos, Bilder, Text, kann es in Folge der im Betrieb auftretenden Belastungen zu Ablösungen von dem Grundmaterial des Beckens, beispielsweise Edelstahl, kommen. Bis jetzt ist jedoch noch keine Möglichkeit bekannt geworden, wie sich die Haltbarkeit bzw. die Haftfestigkeit und die Lebensdauer einer Markierung an einer Oberfläche eines Beckens vorhersagen lässt. Dies bringt den Nachteil mit sich, dass es nicht erkennbar ist, ob die Markierung qualitativ hochwertig ist und gute Eigenschaften hinsichtlich einer Dauerbelastung aufweist.

Es ist daher eine Aufgabe der Erfindung, den oben genannten Nachteil zu überwinden.

Diese Aufgabe wird mit einem Verfahren der eingangs genannten Art erfindungsgemäß dadurch gelöst, dass in einem Schritt i) eine der Markierung hinsichtlich Dicke und Zusammensetzung entsprechende Schicht auf ein als Substrat dienendes Probenstück, welches aus einem gleichen Material besteht wie die der Nässe ausgesetzte Oberfläche des Beckens, aufgetragen wird, wobei in einem Schritt ii) ein Querschnitt durch die Schicht und das Substrat angefertigt wird, und in einem Schritt iii) eine Dicke der Schicht und eine Größe von in der Schicht enthaltenen Partikeln ermittelt wird, wobei überprüft wird, ob Partikel mit einem maximalen Querschnittsdurchmesser von mehr als 30% der Dicke der Schicht vorhanden sind, wobei weiters überprüft wird, ob kein Spalt zwischen der Schicht und dem Substrat vorhanden ist und ob kein Lunker in der Schicht enthalten ist.

Das Substrat kann beispielsweise aus einem Blech hergestellt sein, wie es im Beckenbau für die Seitenwände und Boden der Becken verwendet wird. Das Substrat kann beispielsweise eine Fläche von 100 cm² - 1 m² aufweisen, wobei grundsätzlich auch größere oder kleinere Substrate möglich sind. Der Schnitt durch das Substrat und die Schicht kann beispielsweise mit einem Lichtmikroskop betrachtet werden. Ergibt sich, dass kein Spalt zwischen Substrat und Schicht, keine Lunker innerhalb der Schicht und keine Partikel vorhanden sind, die in Bezug auf die Schichtdicke der Schicht einen Durchmesser von größer als 30% aufweisen, so kann die Haftung der Schicht auf dem Substrat als ausreichend eingestuft werden. Es können aber in diesem Fall auch noch weitere Überprüfungen folgen, insbesondere dann, wenn Partikel vorhanden sind, die nahe dem erlaubten Grenzwert liegen. Sind Partikel mit einem größeren Durchmesser oder ein Spalt zwischen dem Substrat und der Schicht oder Lunker innerhalb der Schicht vorhanden, so kann die Haftung der Schicht auf dem Substrat als nicht ausreichend klassifiziert werden. Es hat sich herausgestellt, dass eine zu große Partikelgröße im Verhältnis zur Dicke der Schicht eine Rissbildung und in weiterer Folge ein Abblättern der Schicht von dem Substrat zur Folge hat.

Gemäß einer vorteilhaften Variante der Erfindung kann in einem Schritt ii) nachfolgendem Schritt überprüft werden, ob eine Schwankung der Dicke der Schicht mehr als 10% beträgt.

Darüber hinaus kann in einem Schritt i) nachfolgendem Schritt mittels eines Wirbelstrom-Verfahrens an unterschiedlichen Stellen der Oberfläche der Schicht eine Gleichmäßigkeit der Schicht überprüft werden. Hierbei wird mittels eines wechselnden Magnetfeldes ein Wirbelstrom erzeugt. Der erzeugte Wirbelstrom bewirkt wiederum ein wechselndes Magnetfeld, welches gemessen mittels eines Sensors erfasst werden kann. Die Dicke der Schicht bestimmt hierbei eine Amplitude eines mit dem Sensor gemessenen Signals.

Bei einer bevorzugten Variante der Erfindung kann es vorgesehen sein, dass in einem Schritt iii) nachfolgendem Schritt iv) ein Abriebelement in einer Bewegung über die Oberfläche der Schicht geführt wird, wobei die Bewegung in Form einer Hin- und Herbewegung zwischen Umkehrpunkten auf der Oberfläche der Schicht ausgeführt wird, wobei eine Kante zwischen Schicht und Substrat zwischen den beiden Umkehrpunkten liegt. Eine Hin- und Herbewegung stellt einen Zyklus dar. Das Abriebelement führt mindestens 200 Zyklen, insbesondere mindestens 4.000 Zyklen, auf der Schicht aus, wobei das Abriebelement einen Druck von mindestens 1,0 bis 2 kp/cm², insbesondere 1,2 bis 1,5 kp/cm², auf die Schicht ausübt.

Bei einer Weiterbildung des erfindungsgemäßen Verfahrens kann es vorgesehen sein, dass in einem Schritt iv) nachfolgendem Schritt v) bis zu dem Substrat reichenden Schnitte in die Schicht eingebracht werden, wobei die Schnitte ein Gitter bilden und hierauf ein Klebeband auf die das Gitter geklebt und wieder abgezogen wird.

Darüber hinaus können das Substrat und die Schicht nach Schritt v) für mindestens 24 Stunden einem Kondenswasser-Wechselklima ausgesetzt werden.

Gemäß einer vorteilhaften Ausführungsform kann es vorgesehen sein, dass das Substrat und die Schicht in einer Anwärmphase einer Luftfeuchtigkeit von 100% ausgesetzt und in einer der Anwärmphase folgenden Abkühlphase einer Luftfeuchtigkeit von weniger als 100% ausgesetzt werden, wobei die Abkühlphase mindestens doppelt so lange wie die Anwärmphase dauert.

Das Substrat kann in einem Schritt v) nachfolgendem Schritt vi) einer Salzsprühnebelprüfung unterworfen werden. Günstigerweise werden mehrere Zyklen, insbesondere mindestens fünf Zyklen, durchlaufen, in welchen das Substrat und die Schicht zuerst dem Kondenswasser-Wechselklima ausgesetzt, und dann einer Salzsprühnebelprüfung unterworfen werden, wobei ein Zyklus eine Salzsprühnebelprüfung gefolgt von einem Kondenswasser-Wechselklima-Test umfasst.

In einem Schritt vi) nachfolgendem Schritt vii) kann die Nassabriebbeständigkeit der Schicht überprüft werden. Gemäß einer Variante Erfindung kann in einem Schritt vii) nachfolgendem Schritt viii) das Substrat und die Schicht einer Filiformkorrosionsprüfung unterworfen werden.

Um eine Belastung durch Sonnenlicht zu simulieren, kann das Substrat und die Schicht in einem Schritt viii) nachfolgendem Schritt ix) einer Bestrahlung mit UV-Licht ausgesetzt werden.

Die Erfindung wird anhand eines nicht einschränkenden in den Figuren dargestellten Ausführungsbeispiels näher erläutert. In den Figuren zeigen schematisch:
- Fig. 1: einen Querschnitt durch ein Substrat mit einer darauf aufgebrachten Schicht;
- Fig. 2: eine Draufsicht auf das Substrat von Fig. 1 mit einem Abriebelement und
- Fig. 3: eine Draufsicht auf das Substrat aus Fig. 1 mit einem Gitter aus Schnittlinien.

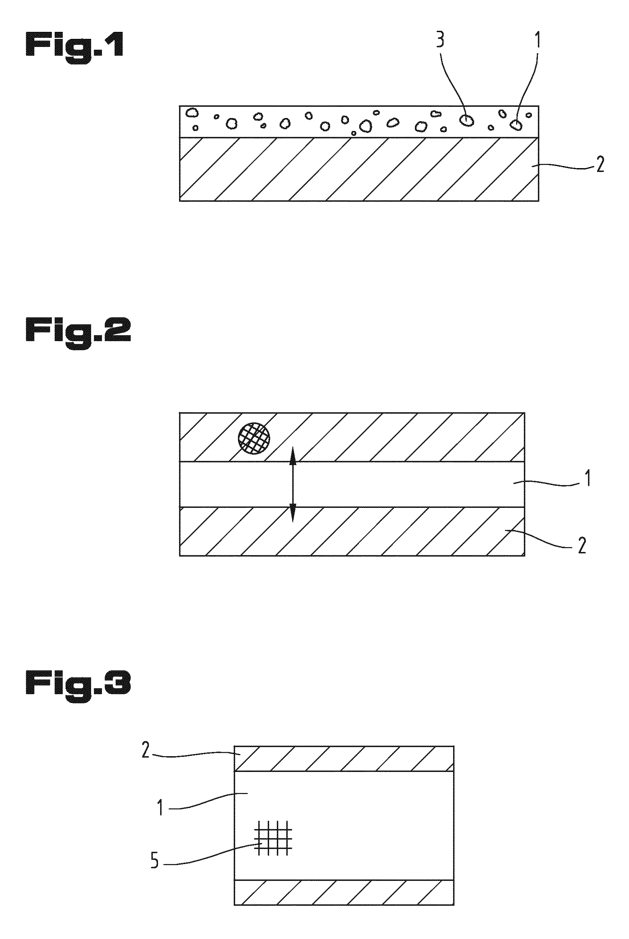

Gemäß Fig. 1 wird bei einem erfindungsgemäßen Verfahren zum Überprüfen einer Haftung einer Markierung auf einer Oberfläche eines in einem Betrieb mit einer Flüssigkeit befüllten Beckens, wie Schwimmbecken, Erlebnisbecken, Mehrzweckbecken, Kinderplanschbecken, Warmsprudelbecken, Tauchbecken, Saunabecken, Kneippbecken, Therapiebecken, usw. in einem Schritt i) eine der Markierung hinsichtlich Dicke und Zusammensetzung entsprechende Schicht 1 auf ein als Substrat 2 dienendes Probenstück aufgebracht. Die Schicht kann mittels verschiedener Herstellungsmethoden auf das Substrat 2 aufgebracht werden ( mechanisch, chemisch, galvanisch, Beschichten, Kleben, Lackieren, Lasern, etc.)

Das Substrat 2 ist aus einem gleichen Material hergestellt wie die Oberfläche des Beckens. Bevorzugt ist das Substrat 2 aus Metall, beispielsweise aus Stahl, beispielsweise Edelstahl, gefertigt.

In einem Schritt ii) wird ein Querschnitt durch die Schicht 1 und das Substrat 2 angefertigt. Dies kann beispielsweise durch Schneiden oder Sägen erfolgen.

In einem Schritt iii) wird eine Dicke der Schicht 1 und eine Größe von in der Schicht 1 enthaltenen Partikeln 3 ermittelt. Hierbei wird überprüft, ob Partikel 3 mit einem maximalen Querschnittsdurchmesser von mehr als 30% der Dicke der Schicht 1 und eine ausreichende Anbindung der Schicht 1 an das Substrat 2 vorhanden sind. Ist zwischen dem Substrat 2 und der Schicht 1 ein Spalt oder sind in der Schicht 1 Lunker enthalten oder sind Partikel vorhanden, deren Durchmesser größer als 30% der Dicke der Schicht beträgt ("zu große Partikel"), so kann die aufgetragene Schicht 1 in Form einer ja/nein Entscheidung als nicht ausreichend haftfähig bzw. haltbar beurteilt werden. Um eine besonders hohe Güte zu gewährleisten, kann bereits bei Vorliegen eines einzigen zu großen Partikels oder eines einzigen Lunkers oder eines einzigen Spalts zwischen der Schicht 1 und dem Substrat 2 die Schicht 1 als ungenügend haftfähig bzw. haltbar klassifiziert werden.

Ist die Schicht 1 aufgrund der Größe der Partikel 3 und der Dicke und Qualität der Schicht 1 als ausreichend haftfähig beurteilt worden, können noch weitere Schritte zur quantitativen und qualitativen Beurteilung der Schicht folgen. So kann beispielsweise in einem Schritt ii) nachfolgendem Schritt überprüft wird, ob eine Schwankung der Dicke der Schicht 1 weniger als 10% beträgt. Auch kann in einem Schritt i) nachfolgendem Schritt mittels eines Wirbelstrom-Verfahrens an unterschiedlichen Stellen der Oberfläche der Schicht eine Gleichmäßigkeit der Schicht 1 überprüft werden. Da Wirbelstromverfahren zur Messung von Schichtdicken dem Fachmann in großer Zahl bekannt sind, wird an dieser Stelle nicht näher auf dieses Verfahren eingegangen.

Die Gleichmäßigkeit der Schicht 1 ist neben der Partikelgröße und der Schichtanbindung an das Substrat 2 ein Parameter, der einen Rückschluss darauf zulässt, ob die Schicht 1 gut auf dem Substrat 2 haftet. So können große Schwankungen (über 10 Prozent) der Dicke der Schicht 1 darauf hindeuten, dass die Haftfestigkeit der Schicht 1 an dem Substrat 2 und somit die Lebensdauer der Schicht 1 nicht optimal ist.

Wie in Fig. 2 dargestellt, kann in einem Schritt iii) nachfolgendem Schritt iv) ein Abriebelement 4, beispielsweise ein Scheuerschwamm, in einer Bewegung über die Oberfläche der Schicht 1 geführt werden. Die Bewegung, die in Fig. 2 durch einen Doppelpfeil angedeutet ist, kann in Form einer Hin- und Herbewegung zwischen Umkehrpunkten auf der Oberfläche der Schicht 1 ausgeführt werden. Eine Hin- und Herbewegung entspricht hierbei einem Zyklus. Das Abriebelement 4 führt mindestens 200 derartige Zyklen, beispielsweise mindestens 4.000 Zyklen, auf der Schicht 1 aus. Hierbei wird das Abriebelement 4 mit einem Druck von mindestens 1,0 bis 2 kp/cm², insbesondere 1,2 bis 1, 5 kp/cm², auf die Schicht 1 gepresst. Der oben genannte Abriebtest kann in einem trockenen Zustand der Schicht 1 und beispielsweise gemäß der Norm DIN EN ISO 11998 erfolgen, wobei eine in der Norm genannte Probenfolie durch das Substrat 2 ersetzt wird. Mittels Lupe oder Lichtmikroskop kann anschließend überprüft werden, ob es zu unzulässigen Schichtschädigungen, wie Kratzern, Abplatzungen oder Schichtfalten gekommen ist.

Gemäß Fig. 3 können in einem Schritt iv) nachfolgendem Schritt v) bis zu dem Substrat 2 reichenden Schnitte 5 in die Schicht 1 eingebracht werden. Die Schnitte 5 bilden ein Gitter, auf welches ein Klebeband geklebt und wieder abgezogen wird. Die hier beschriebene Gitterschnittprüfung kann beispielsweise gemäß der Norm DIN EN ISO 2409 durchgeführt werden. Wenn die Schnittränder vollkommen glatt sind und keines der durch die Schnitte 5 gebildeten Quadrate abgeplatzt ist oder an den Schnittpunkten der Schnitte 5 kleine Splitter der Schicht 1 abgeplatzt sind und die abgeplatzte Fläche nicht größer als 5% einer Gitterschnittfläche ist, so kann die die Schicht als ausreichend gut haftend klassifiziert werden oder noch ein weiterer Überprüfungsschritt durchgeführt werden.

So können das Substrat 2 und die Schicht 1 nach Schritt v) für mindestens 24 Stunden einem Kondenswasser-Wechselklima ausgesetzt werden. Hierbei können das Substrat 2 und die Schicht 1 in einem Proberaum in einer Anwärmphase einer Luftfeuchtigkeit von 100% ausgesetzt und in einer der Anwärmphase folgenden Abkühlphase einer Luftfeuchtigkeit von weniger als 100% ausgesetzt werden. Die Abkühlphase ist jedoch mindestens doppelt so lange wie die Anwärmphase. Die Überprüfung in dem Kondenswasser-Wechselklima kann beispielsweise gemäß der Norm DIN EN ISO 6270-2 erfolgen.

Anschließend an die Kondenswasser-Wechselklima Prüfung können die Schicht 1 und das Substrat 2 in einem Schritt v) nachfolgendem Schritt vi) einer Salzsprühnebelprüfung unterworfen werden, die beispielsweise gemäß der Norm DIN ISO 9227 durchgeführt werden kann. Hierbei hat es sich als besonders aussagekräftig herausgestellt, wenn mehrere Zyklen, insbesondere mindestens fünf Zyklen, durchlaufen werden, in welchen das Substrat 2 und die Schicht 1 dem Kondenswasser-Wechselklima ausgesetzt und hierauf der Salzsprühnebelprüfung unterworfen werden. Ergeben die Kondenswasser-Wechselklima Prüfung und die Salzsprühnebelprüfung keine sichtbare Beeinträchtigung der Schicht 1, insbesondere keine e sichtbare Korrosion im Bereich von Kanten der Schicht 1 auf dem Substrat 2, keine sichtbare Blasenbildung im Bereich der Gitterschnitte und keine Delamination, so kann diese als ausreichend gut klassifiziert werden oder einer weiteren Überprüfung unterzogen werden.

So kann in einem Schritt vi) nachfolgendem Schritt vii) die Nassabriebbeständigkeit der Schicht 1, beispielsweise gemäß der Norm DIN EN ISO 11998 überprüft werden. Die Überprüfung der Nassabriebbeständigkeit kann so wie die oben unter Figur 2 beschriebene Überprüfung der Trockenabriebbeständigkeit durchgeführt werden, jedoch erfolgt die Überprüfung der Nassabriebbeständigkeit in einem mit einer Flüssigkeit benetzten Zustand der Schicht 1. Mittels Lupe oder Lichtmikroskop kann überprüft werden, ob es durch die Bewegung des Abriebelements 4 über die Schicht 1 und das Substrat 2 zu unzulässigen Schichtschädigungen, wie Kratzern, Abplatzungen oder Schichtfalten gekommen ist.

In einem Schritt vii) nachfolgendem Schritt viii) das Substrat 2 und die Schicht 1 einer Filiformkorrosionsprüfung unterworfen werden, die beispielsweise gemäß der Norm DIN EN ISO 4623 -1 durchgeführt werden kann. Tritt bei der Filiformkorrosionsprüfung kein Rost an dem Substrat zutage, so kann die Schicht als ausreichend gut klassifiziert oder eine weitere Überprüfung vorgenommen werden. So kann beispielsweise nochmals eine Gitterschnittprüfung gemäß der Norm DIN EN ISO 2409 durchgeführt werden, wobei eine abgeplatzte Fläche der Schicht 5% der Gesamtfläche der Schicht 1 nicht überschreiten darf.

Zusätzlich kann auch eine metallurgische Untersuchung des Substrates 2 erfolgen, um festzustellen, ob die zuvor durchgeführten Schritte zu Veränderungen des Substrates 2 geführt haben.

Weiters können das Substrat 2 und die Schicht 1 in einem Schritt viii) nachfolgendem Schritt ix) einer Bestrahlung mit UV-Licht, beispielsweise gemäß der Norm DIN EN 13 523-10, ausgesetzt werden. Die Bestrahlung kann beispielsweise mit einer Energie von 120W/m² erfolgen. Der Zeitraum kann variieren beispielsweise 4 Tage betragen.

Abschließend sei erwähnt, dass das erfindungsgemäße Verfahren gemäß Anspruch 1 einen sehr schnellen Überblick über die Haltbarkeit der Schicht 1 an dem Substrat 2 und deren Güte zulässt. Die Durchführung mehrerer der oben beschriebenen Schritte ermöglicht jedoch eine immer zuverlässigere Aussage. Werden zusätzlich zu Anspruch 1 alle Schritte der abhängigen Ansprüche ausgeführt, so ergibt sich ein Belastungsszenario für die Schicht 1, wie es bei einem mehrmonatigen Gebrauch des Beckens auftritt.

### Bezugszeichenliste

- 1: Schicht
- 2: Substrat
- 3: Partikel
- 4: Abriebelement
- 5: Gitterschnitt

## Patentansprüche

1. Verfahren zum Überprüfen einer Haltbarkeit einer Markierung auf einer Oberfläche eines in einem Betrieb mit einer Flüssigkeit befüllten Beckens, wie Schwimmbecken, Erlebnisbecken, Mehrzweckbecken, Kinderplanschbecken, Warmsprudelbecken, Tauchbecken, Saunabecken, Kneippbecken, Therapiebecken, usw., wobei in einem Schritt i) eine der Markierung hinsichtlich Dicke und Zusammensetzung entsprechende Schicht (1) auf ein als Substrat (2) dienendes Probenstück, welches aus einem gleichen Material besteht wie die der Nässe ausgesetzte Oberfläche des Beckens, aufgetragen wird, wobei in einem Schritt ii) ein Querschnitt durch die Schicht (1) und das Substrat (2) angefertigt wird, und in einem Schritt iii) eine Dicke der Schicht (1) und eine Größe von in der Schicht (1) enthaltenen Partikeln (3) ermittelt wird, wobei überprüft wird, ob Partikel (3) mit einem maximalen Querschnittsdurchmesser von mehr als 30% der Dicke der Schicht (1) vorhanden sind, wobei weiters überprüft wird, ob kein Spalt zwischen der Schicht (1) und dem Substrat (2) vorhanden ist und ob kein Lunker in der Schicht (1) enthalten ist.

2. Verfahren nach Anspruch 1, **dadurch gekennzeichnet, dass** in einem Schritt ii) nachfolgendem Schritt überprüft wird, ob eine Schwankung der Dicke der Schicht (1) weniger als 10% beträgt.

3. Verfahren nach Anspruch 1 oder 2, **dadurch gekennzeichnet, dass** in einem Schritt i) nachfolgendem Schritt mittels eines Wirbelstrom-Verfahrens an unterschiedlichen Stellen der Oberfläche der Schicht eine Gleichmäßigkeit der Schicht (1) überprüft wird.

4. Verfahren nach einem der Ansprüche 1 bis 3, **dadurch gekennzeichnet, dass** in einem Schritt iii) nachfolgendem Schritt iv) ein Abriebelement (4), beispielsweise ein Scheuerschwamm, in einer Scheuerbewegung über die Oberfläche der Schicht (1) geführt wird, wobei die Scheuerbewegung in Form einer Hin- und Herbewegung zwischen Umkehrpunkten auf der Oberfläche der Schicht (1) ausgeführt wird, wobei eine Hin- und Herbewegung einen Zyklus darstellt und das Abriebelement (4) mindestens 200 Zyklen, insbesondere mindestens 4.000 Zyklen, auf der Schicht ausführt, wobei das Abriebelement einen Druck von mindestens 1,0 bis 2 kp/cm², insbesondere 1,2 bis 1, 5 kp/cm², auf die Schicht (1) ausübt.

5. Verfahren nach einem der Ansprüche 1 bis 4, **dadurch gekennzeichnet, dass** in einem Schritt iv) nachfolgendem Schritt v) bis zu dem Substrat (2) reichende Schnitte (5) in die Schicht (1) eingebracht werden, wobei die Schnitte (5) ein Gitter bilden und hierauf ein Klebeband auf die das Gitter geklebt und wieder abgezogen wird.

6. Verfahren nach einem der Ansprüche 5, **dadurch gekennzeichnet, dass** das Substrat (2) und die Schicht (1) nach Schritt v) für mindestens 24 Stunden einem Kondenswasser-Wechselklima ausgesetzt werden.

7. Verfahren nach Anspruch 6, **dadurch gekennzeichnet, dass** das Substrat (2) und die Schicht (1) in einer Anwärmphase einer Luftfeuchtigkeit von 100% ausgesetzt und in einer der Anwärmphase folgenden Abkühlphase einer Luftfeuchtigkeit von weniger als 100% ausgesetzt werden, wobei die Abkühlphase mindestens doppelt so lange ist wie die Anwärmphase.

8. Verfahren nach Anspruch 6 oder 7, **dadurch gekennzeichnet, dass** die Schicht (1) und das Substrat (2) in einem Schritt vi) nachfolgendem Schritt vi) einer Salzsprühnebelprüfung unterworfen werden.

9. Verfahren nach Anspruch 8, **dadurch gekennzeichnet, dass** mehrere Zyklen, insbesondere mindestens fünf Zyklen, durchlaufen werden, in welchen das Substrat (2) und die Schicht (1) dem Kondenswasser-Wechselklima ausgesetzt und hierauf einer Salzsprühnebelprüfung unterworfen werden.

10. Verfahren nach Anspruch 9, **dadurch gekennzeichnet, dass** in einem Schritt vi) nachfolgendem Schritt vii) die Nassabriebbeständigkeit der Schicht (1) überprüft wird.

11. Verfahren nach Anspruch 10, **dadurch gekennzeichnet, dass** in einem Schritt vii) nachfolgendem Schritt viii) das Substrat (2) und die Schicht (1) einer Filiformkorrosionsprüfung unterworfen werden.

12. Verfahren nach Anspruch 11, **dadurch gekennzeichnet, dass** das Substrat und die Schicht in einem Schritt viii) nachfolgendem Schritt ix) einer Bestrahlung mit UV-Licht ausgesetzt werden.
